## Europäisches Patentamt
## European Patent Office
## Office européen des brevets

(19)

(11) Numéro de publication: **0 145 572**
**B1**

# (12) FASCICULE DE BREVET EUROPEEN

(45) Date de publication du fascicule du brevet:
**14.09.88**

(21) Numéro de dépôt: **84402385.3**

(22) Date de dépôt: **22.11.84**

(51) Int. Cl.⁴: **B 62 D 1/16**, F 16 D 3/76, F 16 F 1/38

---

(54) **Axe de colonne de direction.**

---

(30) Priorité: **30.11.83 FR 8319165**

(43) Date de publication de la demande:
**19.06.85 Bulletin 85/25**

(45) Mention de la délivrance du brevet:
**14.09.88 Bulletin 88/37**

(84) Etats contractants désignés:
**BE DE FR GB IT LU NL SE**

(56) Documents cités:
**DE - A - 1 630 376**
**FR - A - 1 031 726**
**FR - A - 1 597 260**
**FR - A - 2 145 833**
**FR - A - 2 149 144**
**FR - A - 2 378 985**
**GB - A - 523 394**
**US - A - 3 046 759**
**US - A - 4 269 043**

(73) Titulaire: **ECIA - EQUIPEMENTS ET COMPOSANTS POUR L'INDUSTRIE AUTOMOBILE, F-25400 Audincourt (FR)**

(72) Inventeur: **Barnabe, Jean-Pierre, 17 Quartier des Combes Saint Germain, F-25700 Valentigney (FR)**
Inventeur: **Clerc, Michel, 27 Rue des Graviers, F-25700 Valentigney (FR)**

(74) Mandataire: **Moncheny, Michel et al, c/o Cabinet Lavoix 2 Place d'Estienne d'Orves, F-75441 Paris Cedex 09 (FR)**

---

## Description

La présente invention concerne un axe de colonne de direction suivant le préambule de la revendication 1.

Le roulement des véhicules sur des sols comportant des aspérités transmet dans tout l'ensemble du système de direction des vibrations parasites diverses. Ces vibrations sont, soit circulaires c'est-à-dire alternatives en torsion, soit longitudinales c'est-à-dire de bas en haut de la colonne de direction. Elles sont par ailleurs transmises au volant par l'intermédiaire de cette dernière.

Il est connu d'après le FR-A-2 149 144 de munir une colonne de direction d'au moins un axe comportant deux tubes coaxiaux ayant des sections aplaties, qui sont emboîtés l'un dans l'autre, la plus grande dimension du tube interne étant supérieure à la plus petite dimension du tube extérieur, de sorte que la rotation relative des deux tubes est très limitée, et un manchon élastique amortisseur inséré entre les deux tubes aplatis.

Afin de permettre à la fois l'amortissement des vibrations de torsion et un déplacement axial relatif de deux tubes, le manchon est fixé au tube intérieur et est recouvert par une garniture interposée entre lui et le tube extérieur et susceptible de coulisser le long de ce dernier.

La présente invention a pour but de fournir un axe de colonne de direction du type ci-dessus qui, sans nécessiter de pièce intermédiaire, assure de façon simple et efficace, l'amortissement des vibrations longitudinales de même que celui des vibrations circulaires.

Cette invention a en effet pour objet un axe de colonne de direction comportant les caractéristiques mentionnées dans la partie caractérisante de la revendication 1.

Les colonnes de direction étant généralement réalisées en deux parties articulées entre elles et constituées par un axe de volant, reliant le volant à un joint du type cardan, et un axe de direction allant de ce joint de cardan au boîtier de direction des roues avant, et les vibrations devant être amorties le plus près possible du boîtier de direction, l'axe de colonne suivant l'invention est tout particulièrement adapté à être utilisé comme axe de direction relié au boîtier.

Selon un mode de réalisation, le tube intérieur est épanoui latéralement à son extrémité, tandis que le tube extérieur est recourbé vers l'intérieur de façon à retenir axialement le manchon élastique.

La description ci-dessous de modes de réalisation donnés à titre d'exemples non limitatifs, et représentés aux dessins annexés, fera d'ailleurs ressortir les avantages et caractéristiques de l'invention.

Sur ces dessins:

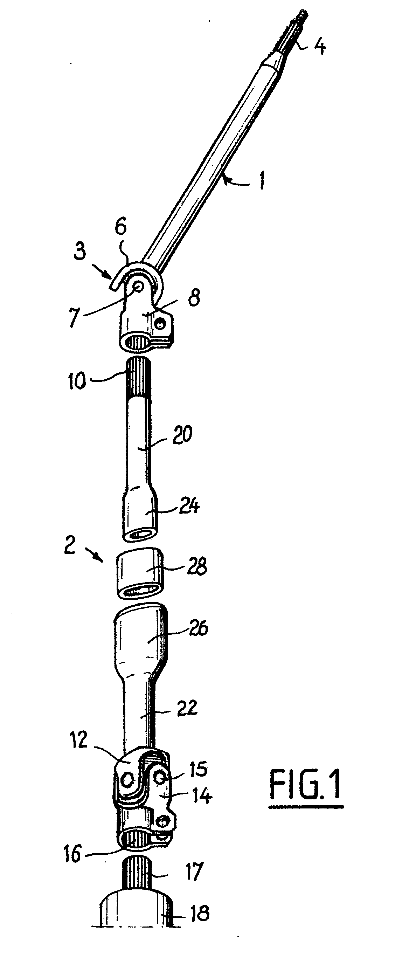

– la fig. 1 est une vue schématique en perspective éclatée d'une colonne de direction;
– la fig. 2 est une vue en coupe longitudinale du dispositif amortisseur formé sur l'axe de colonne;
– la fig. 3 est une vue de côté du dispositif amortisseur de la figure 2;
– la fig. 4 est une vue en coupe suivant la ligne 4–4 de la figure 2;
– la fig. 5 est une vue en coupe longitudinale d'une variante de réalisation de l'axe de colonne;
– la fig. 6 est une vue de côté de l'axe de la figure 5;
– la fig. 7 est une vue en bout, selon la flèche F, de l'axe de la figure 5.

Comme le montrent les dessins, une colonne de direction comporte généralement deux axes, respectivement 1 et 2, réunis par un joint de cardan 3. Dans ce but l'axe supérieur 1 est muni à l'une de ses extrémités de cannelures 4 de fixation du volant, tandis que son extrémité opposée est solidaire d'une fourche 6 réunie par un croisillon 7 à une seconde fourche 8 de l'articulation du type cardan 3.

Le second axe 2 comporte, comme le premier, à une extrémité des cannelures 10 de fixation sur la fourche 8 et, à son autre extrémité, une fourche 12 destinée à coopérer avec une seconde fourche 14 à laquelle elle est reliée par un croisillon 15. La fourche 14 est, comme la fourche 8, munie de cannelures internes 16 destinées à coopérer avec des cannelures correspondantes 17 portées par un axe solidaire du boîtier de direction 18.

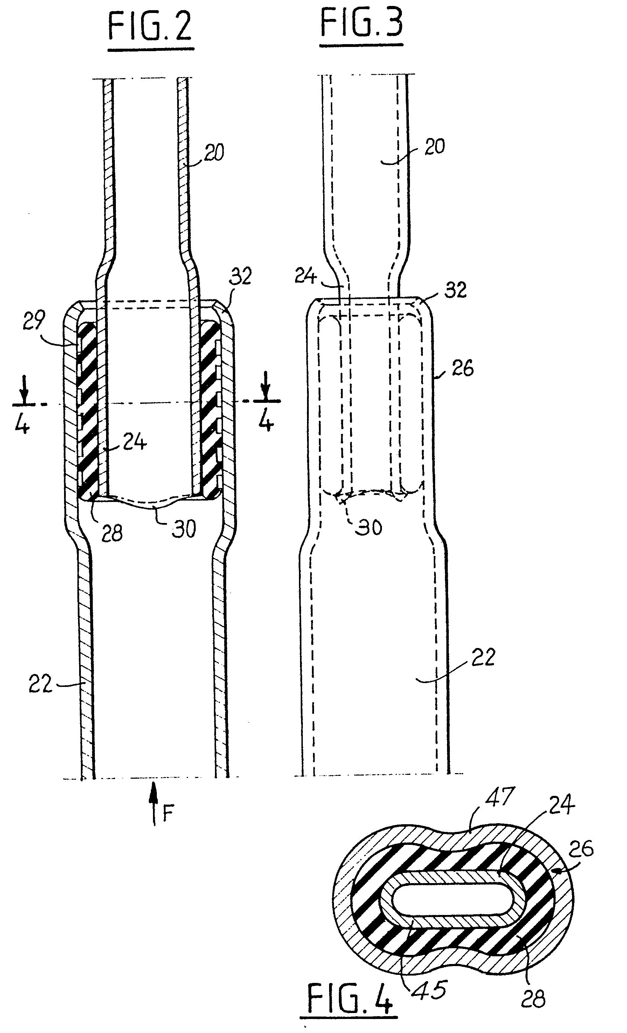

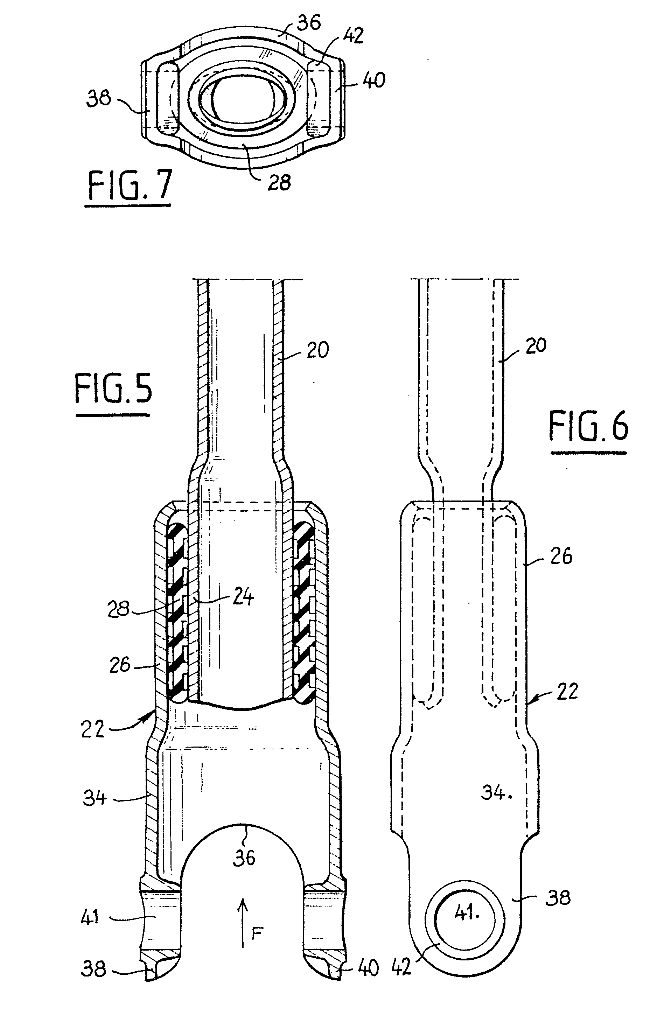

Selon l'invention, l'axe de direction 2 est interrompu et est formé par deux tubes, respectivement 20 et 22, dont les extrémités en regard sont aplaties. Ainsi, le tube supérieur 20 est terminé, à son extrémité opposée aux cannelures 10, par une portion aplatie 24 ayant une section ovale ou analogue, et le tube 22 comporte également une portion 26 de section sensiblement ovale. Le tube supérieur 20 a un diamètre inférieur à celui du tube 22, de sorte que la portion ovale 24 est emboîtée dans la portion ovale 26, tandis qu'un manchon élastique 28 est interposé entre les deux tubes, comme le montrent les figures 2 et 4.

Le manchon 28 a également une forme cylindrique de section ovale et remplit l'espace entre les deux tubes. Il est retenu axialement à la partie inférieure du tube interne 24 par des pattes 30 formées par épanouissement de la paroi de ce tube. A sa partie supérieure, le manchon 28 est également retenu par un rebord 32, rabattu vers l'intérieur, de l'extrémité du tube extérieur 26.

Les deux parties ovales 24 et 26 ont une longueur supérieure à celle du manchon 28, ce qui permet aux deux tubes de se déplacer axialement l'un par rapport à l'autre sur une certaine distance. Le manchon 28 est toutefois réalisé en un matériau élastique et amortisseur pour absorber les amplitudes vibratoires longitudinales d'un tube par rapport à l'autre. Par suite, ces vibrations transmises par le boîtier de direction 18 à l'axe de direction 2 n'atteignent pas le tube 20.

De préférence, le manchon 28 est cannelé intérieurement et/ou extérieurement en 29 dans l'une au moins de ses surfaces en contact avec les tubes 26 et 24, ce qui accroît la souplesse longitudinale des deux tubes l'un par rapport à l'autre.

La plus grande dimension du tube intérieur 24 est de préférence supérieure à la plus petite dimension du tube extérieur 26, comme le montre plus particulièrement la figure 4. Par suite, lors d'un déplacement angulaire de l'un des tubes par rapport à l'autre, le manchon 28 se trouve écrasé puis les deux tubes sont solidaires en rotation. Le jeu relatif entre les deux tubes est suffisant pour absorber des vibrations circulaires éventuelles, mais suffisamment faible pour que les déplacements commandés par le volant soient quasi immédiatement transmis au tube inférieur 22. En outre, en cas de détérioration du manchon 28, le tube intérieur 24 viendrait buter contre le tube extérieur 26 et entraînerait automatiquement celui-ci. Il faut d'ailleurs remarquer que la présence du bord recourbé 32 s'étendant sur tout le pourtour du tube 26 réduit encore la dimension du déplacement relatif angulaire entre les deux tubes. Il en résulte une utilisation optimale du manchon élastique amortisseur dont l'écrasement maximum est ainsi limité dans le domaine des couples élevés, ce qui prolonge ses qualités d'amortisseur et sa durée de vie.

Comme le montre la figure 4, le tube interne 24 comporte deux faces planes opposées 45, entre deux portions extrêmes incurvées. Le tube extérieur 26 comporte, lui, deux renfoncements longitudinaux opposés 47, qui ont chacun une face convexe en portion de cylindre en regard de l'une des faces planes 45 du tube interne. La paroi du manchon amortisseur 28, interposée entre ces deux tubes, a une épaisseur qui varie sur le pourtour du manchon de façon à remplir la totalité de l'espace entre les deux tubes et à permettre ainsi l'absorption des vibrations. La liaison entre les tubes est ainsi rendue plus rigide tandis que l'amortissement des vibrations reste efficace. En effet, le contact entre le tube interne 24 et le rebord extrême 32 du tube extérieur 26 peut se produire, par exemple, pour une rotation de l'ordre de ± 8° du tube 24 par rapport au tube 26.

Bien entendu, la dimension longitudinale des tubes 20 et 22 peut varier selon les utilisations et selon la position préférée pour le dispositif amortisseur de vibrations. Il est toutefois important que ce dispositif soit le plus près possible du boîtier de direction, de sorte que la longueur du tube 22 est de préférence réduite par rapport à celle du tube 20.

Il peut même être avantageux de réaliser le tube inférieur de l'axe de direction 2 de la manière représentée sur les figures 5 à 7. Dans ce cas, l'ensemble amortisseur constitué par les portions ovales 24, 26 associées au manchon 28, est directement voisin de la fourche de l'articulation sur le boîtier de direction. En effet, une fourche solidaire du tube inférieur 22 est formée par déformation de la partie ovale de ce tube, qui présente une partie plus large 34 découpée en 36 pour constituer les deux branches 38, 40 de la fourche. Chacune de ces branches est ensuite, de préférence, traitée par fluoperçage de façon à former un orifice 41 entouré par un canon 42 prêt à recevoir le croisillon 15 de liaison à la fourche 14 de fixation sur le boîtier de direction.

Dans un tel mode de réalisation, le tube inférieur 22 de l'axe 2 est d'une seule pièce avec la fourche de cardan 34 et présente ainsi une résistance importante.

Il est bien entendu que l'axe de colonne muni d'un système amortisseur pourrait également constituer un axe de volant, ou que les deux axes 1 et 2 pourraient comporter chacun un dispositif amortisseur, selon les nécessités.

**Revendications**

1. Axe de colonne de direction, comportant deux tubes coaxiaux (20, 22) ayant des portions de section aplatie (24, 26) qui sont emboîtées l'une dans l'autre, la plus grande dimension du tube interne (24) étant supérieure à la plus petite dimension du tube extérieur (26) de sorte que la rotation des deux tubes est garantie, et un manchon élastique amortisseur (28) interposé entre les deux portions de section aplatie, caractérisé en ce que les tubes interne et externe ayant des sections droites de forme générale ovale, la section droite du tube interne (24) comporte deux faces planes (45) entre deux portions incurvées, tandis que la section droite du tube externe (26) comporte deux renfoncements opposés (47) ayant chacun une face convexe en regard de l'une des faces planes du tube interne, et en ce que le manchon remplit la totalité de l'espace entre les tubes tout en étant susceptible de se déplacer axialement par rapport à chacun d'eux.

2. Axe suivant la revendication 1, caractérisé en ce que le tube extérieur (26) comporte un bord recourbé vers l'intérieur (32), tandis que le tube intérieur est épanoui (en 30) à sa partie inférieure pour assurer la retenue axiale du manchon (28).

3. Axe suivant la revendication 2, caractérisé en ce que le bord recourbé (32) du tube extérieur s'étend sur toute sa périphérie et limite ainsi la rotation relative des deux tubes.

4. Axe suivant l'une des revendications précédentes, caractérisé en ce que la manchon (28) comporte des cannelures (29) sur au moins l'une de ses faces en contact avec les tubes (24, 26).

5. Axe suivant l'une des revendications précédentes, caractérisé en ce qu'il porte une fourche de cardan (12, 34) à l'une de ses extrémités et des cannelures (10) à son extrémité opposée.

6. Axe suivant la revendication 5, caractérisé en ce que la fourche de cardan (34) est d'une seule pièce avec le tube extérieur (22) et est réalisée par déformation du tube, découpage et fluoperçage.

**Claims**

1. A steering column shaft comprising two coaxial tubes (20, 22) having portions of flattened section (24, 26) which are fitted one inside the other, the largest dimension of the inner tube (24) being greater than the smallest dimension of the outer tube (26) so that rotation of the two tubes is ensured, and a resilient damping sleeve (28) interposed between the two portions of flattened section, characterized in that the inner and outer tubes have generally oval cross sections, the cross section of the inner tube (24) has two flat surfaces (45) between two curved portions, whilst the ross section of the outer tube (26) has two opposed recesses (47) each having convex surface opposite one of the flat surfaces of the inner tube, and the sleeve fills the entire space between the tubes whilst being capable of axial displacement relative to each of them.

2. A shaft according to claim 1, characterised in that the outer tube (26) has an inwardly bent flange (32) whilst the inner tube is opened out (at 30) at its lower end to ensure that the sleeve (28) is axially retained.

3. A shaft according to claim 2, characterised in that the bent flange (32) of the outer tube extends over the entire periphery thereof and this limits the relative rotation of the two tubes.

4. A shaft according to one of the preceding claims, characterised in that the sleeve (28) has grooves (29) on at least one of its surfaces in contact with the tubes (14, 26).

5. A shaft according to one of the preceding claims characterised in that it carries a universal joint fork (12, 34) at one end and splines (10) at its opposite end.

6. A shaft according to claim 5, characterised in that the universal joint fork (34) is in one piece with the outer tube (22) and is produced by forming cutting and piercing of the tube.

**Patentansprüche**

1. Lenksäulenachse, die zwei koaxiale Rohre (20, 22) mit Teilen (24, 26) mit abgeflachtem Querschnitt, die ineinander gesteckt sind, wobei die grösste Abmessung des Innenrohres (24) grösser als die kleinste Abmessung des Aussenrohres (26) ist, derart, dass eine Drehung der beiden Rohre gewährleistet ist, und eine elastische Dämpfungsmanschette (28) aufweist, die zwischen den beiden Teilen mit abgeflachtem Querschnitt angeordnet ist, dadurch gekennzeichnet, dass das Innen- und Aussenrohr etwa oval geformte Querschnitte haben, der Querschnitt des Innenrohres (24) zwei planare Flächen (45) zwischen zwei gekrümmten Teilen aufweist, während der Querschnitt des Aussenrohres (26) zwei gegenüberliegende Verstärkungen (47) jeweils mit einer konvexen Fläche bezüglich einer der ebenen Fläche des Innenrohres aufweist und dass die Manschette den gesamten Zwischenraum zwischen den Rohren ausfüllt, so dass diese sich zueinander axial verschieben können.

2. Achse nach Anspruch 1, dadurch gekennzeichnet, dass das Aussenrohr (26) einen nach innen umgebogenen Rand (32) aufweist, während des Innenrohr an seinem unteren Teil (bei 30) ausgebaucht ist, um eine feste axiale Halterung der Manschette (28) zu gewährleisten.

3. Achse nach Anspruch 2, dadurch gekennzeichnet, dass der umgebogene Rand (32) des Aussenrohres über den gesamten Aussenumfang verläuft und somit die relative Drehung der beiden Rohre begrenzt.

4. Achse nach einem der vorhergehenden Ansprüche, dadurch gekennzeichnet, dass die Manschette (28) Rillen (29) in wenigstens einer ihrer Aussenflächen aufweist, die mit den Rohren (24, 26) in Berührung stehen.

5. Achse nach einem der vorhergehenden Ansprüche, dadurch gekennzeichnet, dass sie eine Kardangabel (12, 34) an einem ihrer Enden und Rillen (10) am gegenüberliegenden Ende aufweist.

6. Achse nach Anspruch 5, dadurch gekennzeichnet, dass die Kardangabel (34) in einem Stück mit dem Aussenrohr (22) ausgebildet ist, und durch ein Formen, Ausschneiden und Fliessbohren des Rohres gebildet ist.

FIG.1

0 145 572

FIG.2

FIG.3

FIG.4

FIG.7

FIG.5

FIG.6